(19) **Europäisches Patentamt / European Patent Office / Office européen des brevets**

(11) **EP 1 449 383 B1**

(12) **EUROPEAN PATENT SPECIFICATION**

(45) Date of publication and mention of the grant of the patent:
**30.06.2010 Bulletin 2010/26**

(51) Int Cl.:
***H04N 7/26*** (2006.01)

(21) Application number: **02789126.6**

(86) International application number:
**PCT/SE2002/002206**

(22) Date of filing: **29.11.2002**

(87) International publication number:
**WO 2003/047268 (05.06.2003 Gazette 2003/23)**

(54) **GLOBAL MOTION COMPENSATION FOR VIDEO PICTURES**

GLOBALE BEWEGUNGSKOMPENSATION FÜR VIDEOBILDER

COMPENSATION DE MOUVEMENT GLOBAL POUR IMAGES VIDEO

(84) Designated Contracting States:
**AT BE BG CH CY CZ DE DK EE ES FI FR GB GR IE IT LI LU MC NL PT SE SK TR**

(30) Priority: **30.11.2001 US 334979 P**
**27.11.2002 US 306349**

(43) Date of publication of application:
**25.08.2004 Bulletin 2004/35**

(60) Divisional application:
**10153165.5**

(73) Proprietor: **TELEFONAKTIEBOLAGET LM ERICSSON (publ)**
**164 83 Stockholm (SE)**

(72) Inventors:
• **SJÖBERG, Rickard**
  **S-147 30 Tumba (SE)**
• **EINARSSON, Torbjörn**
  **S-112 40 Stockholm (SE)**
• **FRÖJDH, Per**
  **S-113 39 Stockholm (SE)**

(74) Representative: **Norin, Klas**
  **Ericsson AB**
  **Patent Unit**
  **Service Layer & Multimedia**
  **Torshamnsgatan 21-23**
  **S-164 80 Stockholm (SE)**

(56) References cited:
**WO-A-00/70879      WO-A-98/52356**
**US-A- 5 565 920**

**EP 1 449 383 B1**

**Description**

**BACKGROUND OF THE INVENTION**

The invention disclosed and claimed herein generally pertains to a method for compression of video signal data. More particularly, the invention pertains to a method of the above type which employs global motion compensation. Even more particularly, some embodiments of the invention pertains to a method of the above type wherein macroblocks are grouped into slices and global motion compensation information is transmitted with encoded slices.

It is anticipated that embodiments of the invention could be used in connection with television decoders of standard (SDTV) and high (HDTV) definition digital TV signals, as a part of video conferencing systems, and in computers including PCs, laptops and the like for decoding video. Embodiments could also be used in mobile devices such as mobile phones and PDAs, as a part of a decoder in a digital cinema projector, and in video recorders, players and home entertainment systems. However, it is not intended to limit the invention to such embodiments.

Digital video signals, in non-compressed form, typically contain large amounts of data. However, the actual-necessary information content is considerably smaller due to high temporal and spatial correlations. Accordingly, video compression, or coding, is used to reduce the amount of data which is actually required for certain tasks, such as storage of the video signals or for transmitting them from one location to another. In the coding process temporal redundancy can be used by making so-called motion-compensated predictions, where regions of a video frame are predicted from similar regions of a previous frame. That is, there may be parts of a frame that contain little or no change from corresponding parts of the previous frame. Such regions can thus be skipped or non-coded, in order to maximize compression efficiency. On the other hand, if a good match with a previous frame cannot be found, predictions within a frame can be used to reduce spatial redundancy. With a successful prediction scheme, the prediction error will be small and the amount of information that has to be coded greatly reduced. Moreover, by transforming pixels to a frequency domain, e.g., by using the discrete cosine transform, spatial correlations provide further gains in efficiency.

Herein, the terms "picture" and 'frame" are used interchangeably to refer to a frame of image data in a video sequence.

High temporal correlations are characteristic of video. Hence, much effort in optimizing video compression is focused on making accurate temporal predictions of regions of a frame. The better the prediction, the less bits are needed to code the discrepancy. The prediction itself is coded as instructions on how to translate, or even scale or rotate, a previously coded region. If many regions of a frame have similar motion, such as in a pan or zoom, further improvements in compression efficiency can result from coding a global motion separately, which then applies to all or some regions of the frame. This technique is often referred to as global motion compensation (GMC).

There are several reasons, however, why one should not address the whole frame when global motion compensation is used. The first reason is error resilience. In order to prevent error propagation from corrupted parts of an image, prediction is often constrained within bounded segments called slices. Each slice of a frame should therefore also be self-contained regarding global motion information. Another reason is that global motion compensation may not be relevant for an entire frame, even though smaller parts of the frame may benefit from global motion compensation applied to each part separately.

*Still image coding versus motion compensation*

A typical video codec, such as ITU-T Recommendations H.261 and H.263, MPEG-1 part 2, MPEG-2 part 2 (H.262), or MPEG-4 part 2, operates by sequentially encoding a video sequence frame by frame. A frame is further divided into blocks that are coded sequentially row by row, starting at the top left corner and ending at the bottom right corner. A typical block size is that of a macroblock (MB) covering 16x16 luminance pixels.

The first frame in the sequence is encoded as a still image, called an *intra* frame. Such a frame is self-contained and does not depend on previously coded frames. However, they are not only used at the start of the sequence, but may also be advantageously used at instances where the video changes abruptly, such as scene cuts, or where it is desirable to have a random-access point, from which a decoder can start decoding without having to decode the previous part of the bitstream. The pixel values of intra-coded macroblocks are usually transformed to a frequency domain, e.g. using discrete cosine transform and the transform coefficients quantized in order to reduce the size of the resulting bitstream.

In contrast, an *inter* frame is coded as a *motion-compensated* difference image relative to an earlier frame. By using an already decoded frame (reconstructed frame) as reference, the video coder can signal for each macroblock a set of motion vectors (MVs) and coefficients. The motion vectors (one or several depending on how the macroblock is partitioned) inform the decoder how to spatially translate the corresponding regions of the reference frame in order to make a prediction for the macroblock under consideration. This is referred to as motion compensation. The difference between the prediction and the original is encoded in terms of transform coefficients. However, not all macroblocks of an inter frame need to be motion compensated. If the change from the reference macroblock to the current macroblock is small, the macroblock can be coded in COPY mode, i.e. not coded per se but signaled to be *copied*. See section 5.3.1 of ITU-T Recommendation H.263 "Coded macroblock indication (COD) (1 bit)" for an example of a COPY mode implementation. On the other hand, if the macroblocks differ substantially, it may be better to code it as an intra macroblock.

*Global motion compensation in H.263*

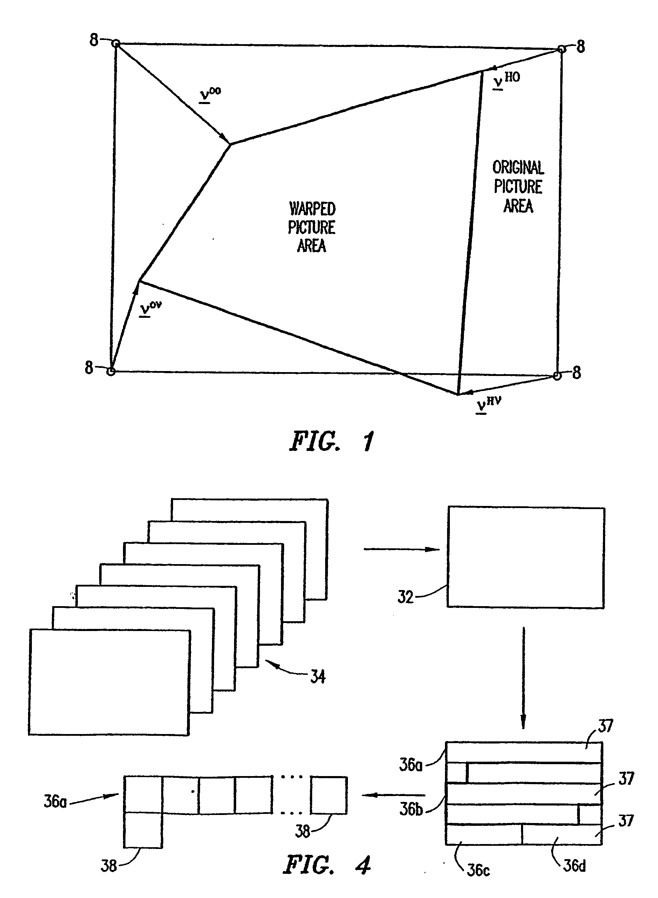

Instead of addressing the motion compensation on a block basis only, it might be advantageous to extract the global motion of a frame separately and code the deviations from the global motion for each block. In a passing or zooming sequence, or when a large object moves over the frame, the overall motion information is likely to be kept at a minimum by such a scheme. A well-known technique is to add an additional step in the coding process before an inter frame is coded. Annex P "Reference Picture Resampling" of H.263 provides a method for "warping" the reference picture given four displacement vectors $\underline{v}^{00}$, $\underline{v}^{H0}$, $\underline{v}^{0V}$, and $\underline{v}^{HV}$ specifying the displacements of the corner pixels of a frame. Figure 1 shows a reference frame, with these vectors respectively extending from the corner pixels 8. The displacements of all other pixels are given by a bilinear interpolation of these vectors, that is:

$$\underline{v}(x, y) = \underline{r}^0 + \left(\frac{x}{H}\right)\underline{r}^x + \left(\frac{y}{V}\right)\underline{r}^y + \left(\frac{x}{H}\right)\left(\frac{y}{V}\right)\underline{r}^{xy} \qquad \text{Eqn.(1)}$$

where (*x, y*) is the initial location of a pixel, H and V represent locations of the corner pixels in the reference frame, and

$$\underline{r}^0 = \underline{v}^{00}$$

$$\underline{r}^x = \underline{v}^{H0} - \underline{v}^{00}$$

$$\underline{r}^y = \underline{v}^{0V} - \underline{v}^{00}$$

$$\underline{r}^{xy} = \underline{v}^{00} - \underline{v}^{H0} - \underline{v}^{0V} + \underline{v}^{HV}$$

For a detailed description of implementation of these formulae, reference may be made to Recommendation H.263. When this global motion compensation is used for a subsequent or inter frame, the reference frame is resampled, pixel-by-pixel, using the above interpolation. After the resampling has been performed, the coder can continue with coding the inter frame, based on the resampled reference frame.

*Global Motion Compensation in MPEG-4 part 2*

Global motion compensation is also specified in the MPEG-4 visual standard using so-called S(GMC)-VOPs. Here the global motion compensation is applied pixel-by-pixel as for H.263 Annex P. However, one can still choose on a macroblock level whether the (interpolated) global motion compensated reference frame should be used or not.

*Global Motion Compensation Proposed for H.26L*

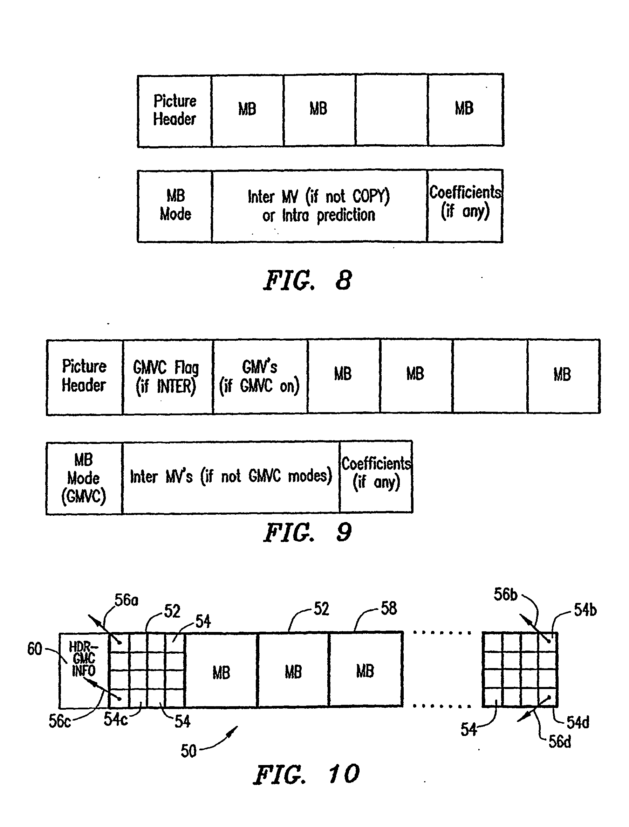

ITU-T is currently developing a new video-coding standard, Recommendation H.26L, which is also likely to be jointly published as an International Standard by ISO/IEC called MPEG-4 AVC (ISO/IEC 14496-10). The current H.26L standard follows the above-mentioned general video coding design with frames and macroblocks, where each picture is encoded by a picture header followed by macroblocks. This standard is discussed further hereinafter, in connection with Figures 8-9.

A significant disadvantage in using global motion compensation for a video frame is the loss of error resilience and flexibility caused by addressing entire frames. Thus, if the global motion vectors are coded only once for a picture, e.g. at the beginning of the picture, and this part of the bitstream is lost during transmission, the whole picture is likely to be corrupted. Accordingly, motion vectors for blocks throughout the picture cannot be decoded and must be concealed. Such errors may also propagate in time, since the next picture can be an inter picture as well, thus using a corrupted picture as reference. Another problem, specifically regarding proposed global motion vector coding (GMVC) design for the H.26L standard, is that different global motions for parts of a frame cannot be specified.

WO 00/70879 describes a method for encoding digital video according to MPEG standards using an adaptive motion estimator.

## SUMMARY OF THE INVENTION

As a further benefit, the invention introduces a new mode for global motion compensation, referred to as Implicit Global Motion Compensation (IGMC). This mode can be used as a tool in many coding scenarios which require a more useful MB mode than COPY mode, in order to minimize the total number of bits needed for motion vectors. In COPY mode the motion vector is always zero. In contrast, IGMC uses implicit motion vectors that are predicted.

The invention can be directed to a method of video data compression for use with image blocks derived by dividing a video frame into a sequence of blocks. In a preferred embodiment, the blocks are macroblocks comprising 16x16 (luminance) pixels and where one of several possible macroblock-coding modes is an implicit global motion compensation (IGMC) mode. This mode is used to copy pixels from a previous frame of a collocated block, dislocated by a motion vector that is predicted from neighboring image blocks of the current frame.

## BRIEF DESCRIPTION OF THE DRAWINGS

Figure 1 is a schematic diagram illustrating global motion compensation of a frame in accordance with the H.263 video compression standard.
Figure 2 is a schematic diagram showing a simplified system for compressing, transmitting and decoding video information in accordance with embodiments of the invention.
Figure 3 is a block diagram showing certain components for the compressor of the system shown in Figure 2.
Figure 4 is a schematic diagram illustrating the partitioning of a frame from a video sequence into slices respectively comprising macroblocks.
Figure 5 is a schematic diagram illustrating motion vectors associated with respective pixel blocks of a macroblock.
Figures 6-7 are schematic diagrams, each showing a slice comprising a sequence of macroblocks for illustrating embodiments of the invention.
Figure 8 is a schematic diagram representing the bitstream syntax of the H.26L design on picture and macroblock levels.
Figure 9 is a schematic diagram representing proposed global motion compensation in H.26L on picture and macroblock levels.
Figure 10 is a schematic diagram showing a slice comprising 4x4 macroblocks for illustrating embodiments of the invention pertaining to the H.26L video compression standard.

## DETAILED DESCRIPTION OF THE PREFERRED EMBODIMENTS

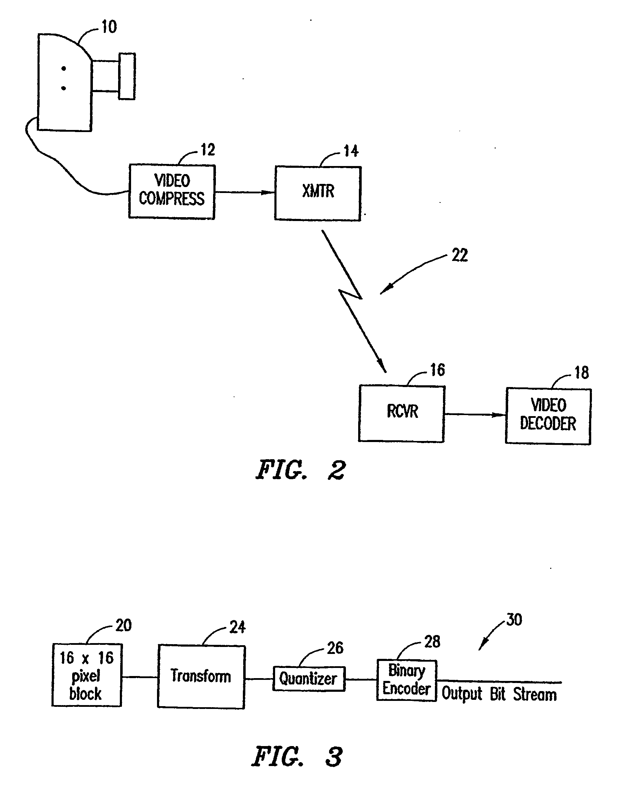

Referring to Figure 2, there is shown a source 10 of video information such as a video camera. The information, comprising a succession of video frames, is coupled to a video coder or compressor 12, which compresses successive frames of data in accordance with an embodiment of an invention, as described herein. A bit stream representing the compressed data is transmitted through a communication channel 22, which may be a wireless communication channel, from a transmitter 14 to a receiver 16. The received data is applied to a decoder 18 to recover the video information.

Referring to Figure 3, there are shown certain conventional components of a compressor 12 for processing a 16x16 pixel macroblock 20, derived by dividing a frame in a sequence of video frames such as is shown in Figure 4. The components shown in Figure 3 include a transform module, such as a Discrete Fourier Transform module 24, a quantizer 26 and a binary encoder 28.

As is known in the art, transform module 24 receives an array of integers, comprising respective gray scale levels (luminance) and color levels (chrominance) of the pixels of macroblock 20. Module 24 applies the transform to the pixel levels to generate an output array of transform coefficients. As is likewise well known, quantizer 26 divides each transform coefficient by a corresponding step size or quantization level. The output of quantizer 26 is directed to binary encoder 28, which generates a corresponding stream of digital bits 30 for transmission through channel 22.

Referring now to Figure 4, there is shown a frame 32 comprising one of the frames in a video sequence 34. Figure 4 further shows frame 32 segmented into a number of slices 36a-d, wherein each slice 36a-d comprises a sequence of macroblocks 38. Each macroblock comprises an array of pixels from frame 32. As described hereinafter in further detail, a slice 36 may contain GMC information pertaining to its macroblocks 38 and/or to frame 32, in accordance with embodiments of the invention.

Figure 4 also shows slice 36a in further detail, to emphasize that a slice boundary can appear after any macroblock of a frame. Slice 36b is shown to include marcoblocks located in several rows 37 of the frame. Moreover, slice 36b starts a few macroblocks from the left frame boundary of the slice and ends a few macroblocks before the right frame boundary on the last row of the slice. Thus, some slices span over more than one row 37, and a row 37 can contain more than one slice, such as the bottom row containing slices 36c and 36d.

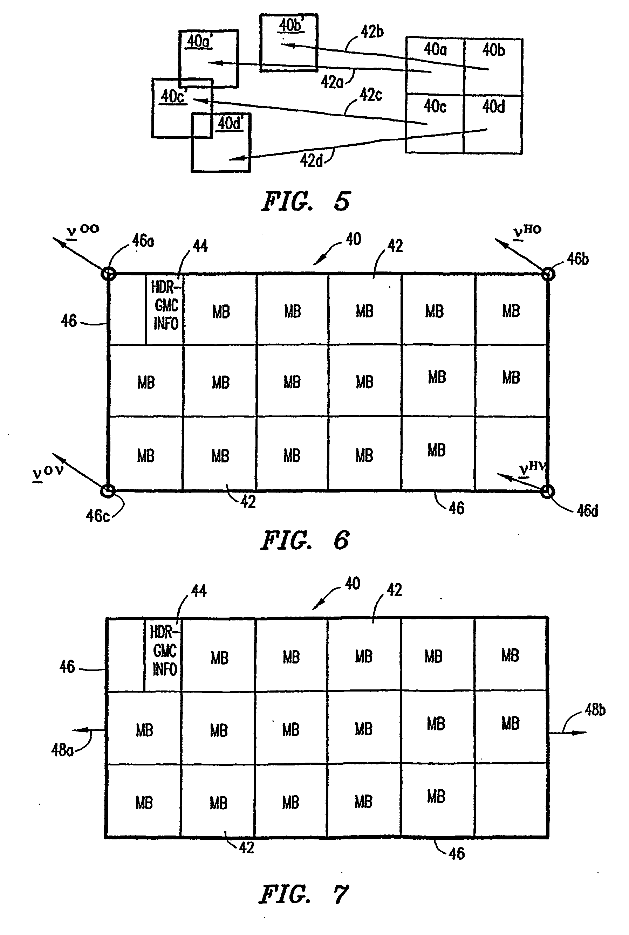

Referring to Figure 5, the pixel blocks 40a'-40d' of a previous frame are used for predicting the blocks 40a-40d of the current frame. The motion vectors 42a-42d are describing the location from where pixels from the first frame shall be copied to blocks 40a-40d of the current frame. This illustrates that the pixel blocks 40a-40d can be readily determined or reconstructed by using a previously decoded frame together with the motion vectors 42a-42d.

Referring to Figure 6, there is shown an encoded slice 40 generated by encoding a slice such as slice 36b shown in Figure 4. Encoded slice 40 comprises macroblocks or image blocks 42 and is provided with a header 44. In one embodiment of the invention, a signal is applied to encoded slice 40, for example by including the signal in header 44, to indicate whether or not global motion compensation (GMC) is to be used in reconstructing the corresponding original slice 36. If GMC is to be used in slice construction, header 44 also includes GMC information. Such GMC information usefully comprises or represents motion vector information from which the motion vectors for each of the blocks 42 of slice 40 can be reconstructed at the decoder. Thus, all motion vectors in slice 40 can be derived exclusively from information contained in slice 40.

In another useful embodiment, all of the slices 40 encoded from respective slices 36 of video frame 32, referred to above, contain the same GMC information. For example, the GMC information could comprise an encoded set of the GM vectors $\underline{r}^0$, $\underline{r}^x$, $\underline{r}^y$, and $\underline{r}^{xy}$ described above in connection with Figure 1. These vectors are referenced to the entire warped video frame, as shown in Figure 1, and are derived from the corner pixel displacement vectors shown therein according to relationships described above. Resiliency is significantly enhanced by repeating this information in each encoded slice, since the information would reach the decoder even if some of the slices were lost in the transmission channel. The encoded GM vectors could be used with bilinear interpolation, in accordance with Equation (1) set forth above, to calculate the global motion compensation for each pixel contained in the slice 40.

In a further embodiment, each encoded slice 40 would have GMC information comprising the global motion vectors $\underline{r}^0$, $\underline{r}^x$, $\underline{r}^y$, and $\underline{r}^{xy}$, wherein the vectors are referenced to the bounding box of the slice rather than to the entire frame. Referring further to Figure 6, there is shown bounding box 46 of slice 40 comprising the smallest rectangle that can contain the slice. Figure 6 shows corner pixels 46a-d at respective corners of bounding box 46, with vectors $\underline{v}^{00}$, $\underline{v}^{H0}$, $\underline{v}^{0V}$, and $\underline{v}^{HV}$ in this case specifying displacement of the respective corner pixels of the bounding box, rather than of the entire frame. The four vectors $\underline{r}^0$, $\underline{r}^x$, $\underline{r}^y$, and $\underline{r}^{xy}$ can be determined from the corner pixel vectors by means of the same relationships set forth above in connection with H.263 for corner pixel displacement of an entire frame. From the four vectors coded for the bounding 46, the global motion compensation for each pixel contained in the slice 40 may be readily calculated using bilinear interpolation, in accordance with Equation (1). It will be readily apparent that in this embodiment, different encoded slices 40 will contain different GMC information.

Referring to Figure 7, there is again shown encoded slice 40 with bounding box 46. However, only two global motion vectors 48a and 48b are shown, which are encoded as the GMC information for slice 40. These vectors refer to the left-most and right-most pixels, respectively, of bounding box 46. Global motion compensation for respective pixels of slice 40 can be determined therefrom. For pixels along a vertical axis, the global motion vectors are the same, whereas along a horizontal axis they are interpolated linearly from the two coded global-motion vectors 48a and 48b.

In a further embodiment, all of the GMC information in a slice can be repeated on the picture or frame level, such as in the header of the frame 32.

Referring to Figure 8, there is shown the bitstream syntax of the H.26L standard on picture and macroblock levels. In H.26L the macroblocks of an inter frame have one of several modes, which currently include 7 inter modes (16x16, 16x8, 8x16, 8x8, 8x4, 4x8 and 4x4), 1 intra mode for 4x4 and 23 intra modes for 16x16. Here NxM refers to the size of the blocks the macroblock is partitioned into. For inter MBs, each block has an MV and for intra MBs, each block is predicted as a unit. Furthermore, there is one COPY mode, which uses no MV and no coefficients. This is the cheapest mode to signal. In fact, run-length coding is used to signal a number of copied (skipped) macroblocks with one codeword.

A global-motion compensation has been proposed for the H.26L standard. It resembles the GMC used in Annex P of H.263 in the way the global motion vectors are defined. A main difference, however, is that the reference picture is not resampled and that the interpolated motion vectors do not apply to pixels but rather to blocks of pixels. The motion vector of an image block with its upper-left pixel as $(x,y)$ can be derived as

$$\underline{v}(x,y) = \underline{r}^{0} + \left(\frac{x}{H-4}\right)\underline{r}^{x} + \left(\frac{y}{V-4}\right)\underline{r}^{y} + \left(\frac{x}{H-4}\right)\left(\frac{y}{V-4}\right)\underline{r}^{xy} \qquad \text{Eqn. (2)}$$

where $\underline{r}^{0}$, $\underline{r}^{x}$, $\underline{r}^{y}$, and $\underline{r}^{xy}$ are related to $\underline{v}^{00}$, $\underline{v}^{H0}$, $\underline{v}^{0V}$, and $\underline{v}^{HV}$ as for H.263 Annex P. However, these motion vectors apply to image blocks consisting of 4x4 pixels. In particular, the vectors, $\underline{v}^{00}$, $\underline{v}^{H0}$, $\underline{v}^{0V}$, and $\underline{v}^{HV}$ apply to the corner blocks of the frame with their upper-left pixels at (0.0), (H-4.0), (0, V-4) and (H-4, V-4), respectively.

Global Motion Vector Coding (GMVC) for H.26L is proposed to apply only for certain macroblock modes of the picture. Whether or not it is used is signaled for each inter frame in the picture header by a flag (GMVC flag). If GMVC is turned on the four GMVs $\underline{r}^{0}$, $\underline{r}^{x}$, $\underline{r}^{y}$, and $\underline{r}^{xy}$ follow the flag. These are used for the current picture whenever a mode using GMVC is signaled in a macroblock. The proposed syntax is shown in Figure 9.

The macroblock modes for macroblocks in a frame with GMVC enabled have two new modes. The COPY mode is replaced by GMVC_COPY and there is an additional mode called GMVC_16. Both modes are inter 4x4 modes, i.e. the macroblock is partitioned into image blocks of 4x4 pixels. The motion vectors for each block is given by the interpolated GMVs as given by the above formula. For GMVC_COPY no coefficients are coded, i.e. the motion-compensated reference picture is copied, whereas for GMVC_16, coefficients are added as well.

Referring to Figure 10, there is shown an encoded slice 50 comprising macroblocks 52, wherein each macroblock 52 is partitioned into 4x4 image blocks 54 in accordance with the H.26L standard. In Figure 10, interpolated GM vectors apply to 4x4 blocks 54 rather than to pixels. Referring further to Figure 10, there are shown corner blocks 54a-d having associated global motion vectors 56a-d, specifying their displacements. Corner blocks 54a-d define the corners of a rectangular bounding box 58 containing slice 50. The motion vectors 56a-d are represented by GMC information contained in header 60 of slice 50. From the information pertaining to GM vectors 56a-d, global motion compensation can be calculated for each of the 4x4 blocks 54 of slice 50, by means of linear interpolation in accordance with Equation(2) above.

In a further embodiment, global motion compensation for each of the image blocks 54 can be calculated from two encoded GM vectors (not shown) specifying displacement of the left-most and right-most 4x4 blocks contained within bounding box 58. In yet another embodiment, global motion compensation for each block 54 can be derived from a single encoded GM vector comprising the GMC information contained in header 60.

In another embodiment wherein a slice is GMC enabled, i.e. contains a signal indicating GMC information, the information comprises a COPY mode signal. In response to this signal in regard to a particular macroblock of the slice, the encoder will copy the corresponding macroblock from the global motion compensated reference picture, that is, from the warped frame as shown in Figure 1. In this embodiment coefficients pertaining to the macroblock may or may not be coded as well.

In an embodiment according to the present invention referred to as Implicit global motion compensation (IGMC) no explicit motion vector is sent with the encoded slice 40. Instead, the macroblock COPY (aka SKIP) mode is reinterpreted as an Inter macroblock mode without coefficients or explicitly coded motion vectors. The motion vector used for motion compensating the macroblock is predicted from neighboring blocks. More specifically, in applying this embodiment to a particular image block in the current frame, a collocated block in a previous frame, dislocated by a motion vector is copied from the previous frame. The motion vector is predicted from neighboring blocks in the current frame, that is, from blocks which are adjacent to or proximate to the particular image block. The IGMC mode can be used to replace the COPY mode in coding an image block.

As a further feature of the IGMC embodiment, a bitstream representing a coded image block can include a syntactic element which may be interpreted to indicate either the IGMC mode or the COPY mode. A switch between the IGMC and COPY modes may be signalled implicitly, by means of other code elements. Alternatively, this switch may be signalled explicitly by a code word.

In a modification of this embodiment, one extra motion vector is sent for each slice, to be used in predicting the first inter block of the slice.

Obviously, many other modifications and variations of the present invention are possible in light of the above teachings. It is therefore to be understood that within the scope of the disclosed concept, the invention may be practiced otherwise than as has been specifically described.

## Claims

1. A method for video data decompression for video frames comprising a plurality of image blocks, wherein each image block shall be decoded according to one of a plurality of coding modes, wherein one of said plurality of modes is a COPY mode implying that a collocated block from a previous frame is signaled to be copied to a current frame with a motion vector of zero; **characterized in that** the method comprises the steps of:

- decoding a data bitstream representing a coded image block of a current frame wherein the data bitstream is decoded according to an IGMC mode or according to the copy mode, wherein said IGMC mode comprises:
- predicting a motion vector from neighboring image blocks of said current frame; and
- decoding the coded image block by copying from a previous frame a collocated block dislocated by the predicted motion vector.

**2.** The method of Claim 1 wherein:

a switch between said IGMC and COPY modes is signalled explicitly by a code word.

**3.** The method of Claim 1 wherein:

a switch between said IGMC and COPY modes is signalled implicitly by previously decoded code elements.

**4.** The method of Claim 1 wherein:

said motion vector prediction is competed, for each vector component individually, as the median of three neighboring motion vectors.

**5.** A video decoder for decoding video frames comprising a plurality of image blocks, wherein each image block shall be decoded according to one of a plurality of coding modes, wherein one of said plurality of modes is a COPY mode implying that a collocated block from a previous frame is signaled to be copied to a current frame with a motion vector of zero; **characterized in that** the video decoder comprises means for decoding a data bitstream representing a coded image block of a current frame, wherein the data bitstream is decoded according to an IGMC mode or according to the copy mode
wherein the video decoder further comprises means for decoding the coded image block according to the IGMC mode by computing a predicted motion vector by predicting motion vectors from neighboring image blocks of said current frame; and decoding the coded image block by copying from a previous frame a collocated block dislocated by the predicted motion vector.

**6.** The video decoder according to the previous claim, wherein the decoder comprises means for computing said predicted motion vector, for each vector component individually, as the median of three neighboring motion vectors.

**Patentansprüche**

**1.** Verfahren zur Dekomprimierung von Videodaten für Videorahmen, die eine Vielzahl von Bildblöcken umfassen, worin jeder Bildblock gemäß einem einer Vielzahl von Codierungsmodi decodiert werden soll, worin einer der Vielzahl von Modi ein COPY-Modus ist, woraus folgt, dass ein kollokierter Block aus einem vorherigen Rahmen signalisiert wird, mit einem Null-Bewegungsvektor in einen aktuellen Rahmen kopiert zu werden; **dadurch gekennzeichnet, dass** das Verfahren folgende Schritte umfasst:

- Decodieren eines Datenbitstroms, der einen codierten Bildblock eines aktuellen Rahmens repräsentiert, worin der Datenbitstrom gemäß einem IGMC-Modus oder gemäß dem COPY-Modus decodiert wird, worin der IGMC-Modus Folgendes umfasst:
- Vorhersagen eines Bewegungsvektors aus benachbarten Bildblöcken des aktuellen Rahmens; und
- Decodieren des codierten Bildblocks durch Kopieren aus einem vorherigen Rahmen von einem durch den vorhergesagten Bewegungsvektor versetzten kollokierten Block.

**2.** Verfahren nach Anspruch 1, worin:

ein Austausch zwischen den IGMC- und den COPY-Modi durch ein Codewort explizit signalisiert wird.

**3.** Verfahren nach Anspruch 1, worin:

ein Austausch zwischen den IGMC- und den COPY-Modi durch vorher decodierte Codeelemente implizit signalisiert wird.

**4.** Verfahren nach Anspruch 1, worin:

die Bewegungsvektorvorhersage als der Median von drei benachbarten Bewegungsvektoren für jede Vektorkomponente einzeln berechnet wird.

**5.** Videodecodierer zum Decodieren von Videorahmen, die eine Vielzahl von Bildblöcken umfassen, worin jeder Bildblock gemäß einem einer Vielzahl von Codierungsmodi decodiert werden soll, worin einer der Vielzahl von Modi ein COPY-Modus ist, woraus folgt, dass ein kollokierter Block aus einem vorherigen Rahmen signalisiert wird, mit einem Null-Bewegungsvektor in einen aktuellen Rahmen kopiert zu werden; **dadurch gekennzeichnet, dass** der Videodecodierer ein Mittel umfasst, um einen Datenbitstrom zu decodieren, der einen codierten Bildblock eines aktuellen Rahmens repräsentiert, worin der Datenbitstrom gemäß einem IGMC-Modus oder gemäß dem COPY-Modus decodiert wird, worin der Videodecodierer außerdem ein Mittel zum Decodieren des codierten Bildblocks gemäß dem IGMC-Modus umfasst durch Berechnen eines vorhergesagten Bewegungsvektors durch Vorhersagen von Bewegungsvektoren aus benachbarten Bildblöcken des aktuellen Rahmens; und Decodieren des codierten Bildblocks durch Kopieren aus einem vorherigen Rahmen von einem durch den vorhergesagten Bewegungsvektor versetzten kollokierten Block.

**6.** Videodecodierer nach dem vorhergehenden Anspruch, worin der Decodierer ein Mittel umfasst, um den vorhergesagten Bewegungsvektor als den Median von drei benachbarten Bewegungsvektoren für jede Vektorkomponente einzeln zu berechnen.

**Revendications**

**1.** Procédé de décompression de données vidéo pour des trames vidéo comportant une pluralité de blocs d'image, dans lequel chaque bloc d'image doit être décodé selon l'un d'une pluralité de modes de codage, dans lequel l'un de ladite pluralité de modes est un mode de copie « COPY » impliquant qu'un bloc colocalisé d'une trame précédente est signalé comme étant à copier vers une trame en cours avec un vecteur de mouvement nul ; **caractérisé en ce que** le procédé comporte l'étape ci-dessous consistant à :

- décoder un flux de données représentant un bloc d'image codé d'une trame en cours dans lequel le flux de données est décodé selon un mode de compensation de mouvement global implicite « IGMC » ou selon le mode de copie, dans lequel ledit mode IGMC comporte les étapes ci-dessous consistant à :
- prédire un vecteur de mouvement à partir de blocs d'image voisins de ladite trame en cours ; et
- décoder le bloc d'image codé en copiant, à partir d'une trame précédente, un bloc colocalisé délocalisé par un vecteur de mouvement prédit.

**2.** Procédé selon la revendication 1, dans lequel :

une commutation entre lesdits modes IGMC et COPY est signalée de manière explicite par un mot codé.

**3.** Procédé selon la revendication 1, dans lequel :

une commutation entre lesdits modes IGMC et COPY est signalée de manière implicite par des éléments de code précédemment décodés.

**4.** Procédé selon la revendication 1, dans lequel :

ladite prédiction de vecteur de mouvement est calculée, pour chaque composante vectorielle de manière individuelle, en tant que la moyenne de trois vecteurs de mouvement voisins.

**5.** Décodeur vidéo pour décoder des trames vidéo comportant une pluralité de blocs d'image, dans lequel chaque bloc d'image doit être décodé selon l'un d'une pluralité de modes de codage, dans lequel l'un de ladite pluralité de modes est un mode de copie « COPY » impliquant qu'un bloc colocalisé d'une trame précédente est signalé comme étant à copier vers une trame en cours avec un vecteur de mouvement nul ; **caractérisé en ce que** le décodeur vidéo comporte un moyen pour décoder un flux de données représentant un bloc d'image codé d'une trame en cours,

dans lequel le flux de données est décodé selon un mode de compensation de mouvement global implicite « IGMC » ou selon le mode de copie,

dans lequel le décodeur vidéo comporte en outre un moyen pour décoder le bloc d'image codé selon le mode IGMC en calculant un vecteur de mouvement prédit par la prédiction de vecteurs de mouvement à partir de blocs d'image voisins de ladite trame en cours, et le décodage du bloc d'image codé en copiant à partir d'une trame précédente un bloc colocalisé délocalisé par le vecteur de mouvement prédit.

6.  Décodeur vidéo selon la revendication précédente, dans lequel le décodeur comporte un moyen pour calculer ledit vecteur de mouvement prédit, pour chaque composante vectorielle de manière individuelle, en tant que la moyenne de trois vecteurs de mouvement voisins.

FIG. 1

FIG. 4

*FIG. 2*

*FIG. 3*

FIG. 5

FIG. 6

FIG. 7

| Picture Header | MB | MB | | MB |
|---|---|---|---|---|

| MB Mode | Inter MV (if not COPY) or Intra prediction | Coefficients (if any) |
|---|---|---|

**FIG. 8**

| Picture Header | GMVC Flag (if INTER) | GMV's (if GMVC on) | MB | MB | | MB |
|---|---|---|---|---|---|---|

| MB Mode (GMVC) | Inter MV's (if not GMVC modes) | Coefficients (if any) |
|---|---|---|

**FIG. 9**

**FIG. 10**

**REFERENCES CITED IN THE DESCRIPTION**

**Patent documents cited in the description**

- WO 0070879 A